# EUROPEAN PATENT APPLICATION

(11) **EP 4 224 685 A1**
(43) Date of publication of application: **09.08.2023**
(21) Application number: 20956234.7
(22) Date of filing: 30.09.2020
(51) Int. Cl.: H02K 15/03

(54) **METHOD FOR MANUFACTURING FIELD MAGNET**

(71) Applicant: Aichi Steel Corporation, Tokai-shi, Aichi 476-8666 (JP)
(72) Inventor: KAN, Satoru, Tokai-shi, Aichi 476-8666 (JP); HIRANO, Hiroaki, Tokai-shi, Aichi 476-8666 (JP); MITARAI, Hironari, Tokai-shi, Aichi 476-8666 (JP); ASANO, Takumi, Tokai-shi, Aichi 476-8666 (JP); FURUYAMA, Motonobu, Tokai-shi, Aichi 476-8666 (JP)
(74) Representative: Kuhnen & Wacker Patent- und Rechtsanwaltsbüro PartG mbB
(86) International application number: PCT/JP2020/037147
(87) International publication number: WO 2022/070306

(57) **Abstract**

An object is to provide a manufacturing method capable of producing, at low cost, a field magnet in which the inner surface of a bonded magnet press-fitted in a case satisfies a desired accuracy. The present invention provides a method for manufacturing a field magnet (F) formed such that a cylindrical bonded magnet (2) is fixed in an approximately bottomed tubular case (1). The bonded magnet is formed by binding magnet particles with a thermosetting resin. The method comprises: a softening step for reheating and softening the bonded magnet after thermal curing treatment; and a press-fitting step for press-fitting the softened bonded magnet into the case from an opening on one side of the case. The case has a cylindrical portion (11) and a lid portion (12) coupled to an other side of the cylindrical portion. The cylindrical portion has a fixing portion (113) for the bonded magnet. At least the fixing portion (113) is formed of a magnetic material. The press-fitting step includes feeding the bonded magnet relatively into the cylindrical portion while allowing a relative posture variation between the bonded magnet and the case. This makes it possible to stably feed even the softened bonded magnet into the case, and the inner surface of the bonded magnet has a similar accuracy to that of the inner surface of the case.

## Description

### [Technical Field]

The present invention relates to a method for manufacturing a field magnet in which a bonded magnet that is a field magnet source is fixed in a case.

### [Background Art]

Field magnets whose field magnet sources are permanent magnets are manufactured, for example, by pressure-bonding a cylindrical bonded magnet (permanent magnet for field) into a yoke or a case that also serves as a yoke (such a yoke or case will be simply referred to as a "yoke," as appropriate). Descriptions relevant to such a method for manufacturing a field magnet are found in the following patent documents.

### [Prior Art Documents]

### [Patent Documents]

Patent Document 1: JP2000-184642A
Patent Document 2: WO2006/1304
Patent Document 3: WO2011/126026
Patent Document 4: JP2005-33844A
Patent Document 5: WO2006/059603
Patent Document 6: JP2006-311661A
Patent Document 7: JP2007-28714A
Patent Document 8: JP2003-70194A
Patent Document 9: JP2000-37054A
Patent Document 10: JP55-178276U

### [Summary of Invention]

### [Technical Problem]

In Patent Documents 1 to 7, a bonded magnet is directly pressure-bonded into a yoke without using an adhesive. Specifically, in Patent Document 1, a bonded magnet and a yoke are pressure-bonded to each other using a phenomenon that the bonded magnet disposed in the yoke oxidizes and expands by heating. In Patent Document 2, a molded body (bonded magnet before thermal curing) is press-fitted directly into a yoke from a cavity, and the molded body and the yoke are pressure-bonded using springback of the molded body. In Patent Document 3, after a molded body (bonded magnet before thermal curing) in a warm state is press-fitted directly into a yoke, the molded body and the yoke are pressure-bonded using an expansion amount of the molded body generated during thermal curing treatment (cure treatment). Patent Documents 1 to 3 are common in that thermal curing treatment is performed after the molded body is placed or fitted in the yoke.

In Patent Documents 4 to 7, the bonded magnet (molded body) reheated after the cure treatment is press-fitted into a housing (yoke) to pressure-bond the bonded magnet and the housing. This press-fitting is not described in detail in these patent documents, but may be performed while restraining the outer circumferential side of the housing in which a desired level of accuracy (such as coaxiality, circularity, or cylindricity) is ensured, considering that the bonded magnet is softened due to the reheating. Note, however, that the accuracy of the outer circumferential surface of the housing is ensured only for assembling the bonded magnet into the housing because the effect on the motor performance is small.

Patent Documents 8 to 10 also describe a method of attaching a magnet to a yoke. However, nothing in Patent Document 8 describes a bonded magnet using a thermosetting resin or heating during its attachment. Moreover, none of Patent Documents 9 and 10 describes a bonded magnet itself in the first place.

The present invention has been made in view of such circumstances, and an object of the present invention is to provide a novel manufacturing method capable of reducing the production cost for a field magnet in which a cylindrical bonded magnet is used.

### [Solution to Problem]

As a result of intensive studies to achieve the above object, the present inventors have succeeded in producing at a low cost a field magnet that satisfies desired specs, through coupling a plurality of members to make a case, softening a cylindrical bonded magnet, and press-fitting the bonded magnet into the case. Developing this achievement, the present inventors have accomplished the present invention, which will be described below.

### «Method for Manufacturing Field Magnet»

(1) The present invention provides a method for manufacturing a field magnet formed such that a cylindrical bonded magnet is fixed in an approximately bottomed tubular case. The bonded magnet is formed by binding magnet particles with a thermosetting resin. The method comprises: a softening step for reheating and softening the bonded magnet after thermal curing treatment; and a press-fitting step for press-fitting the softened bonded magnet into the case from an opening on one side of the case. The case has a cylindrical portion and a lid portion coupled to an other side of the cylindrical portion. The cylindrical portion has a fixing portion for the bonded magnet. At least the fixing portion is formed of a magnetic material. The press-fitting step includes feeding the bonded magnet relatively into the cylindrical portion while allowing a relative posture variation between the bonded magnet and the case.
(2) According to the manufacturing method of the present invention, a field magnet that satisfies required specs can be produced at a low cost. The reasons for this are considered as follows.

First, a case obtained by coupling a lid portion to a cylindrical portion (referred to as a "coupled case," as appropriate) can be produced at a lower cost than a case integrated by deep drawing or the like (referred to as an "integrated case," as appropriate). Specifically, such a coupled case realizes, for example, an improvement in the material yield, a reduction in the cost of facilities (such as molds), a reduction in the defect rate, etc. Moreover, the case (cylindrical portion) is basically sufficient if the accuracy (cylindricity, circularity, etc.) of the inner surface into which the bonded magnet is press-fitted is ensured, and the outer circumferential surface, end portions, etc. do not necessarily need to be highly accurate. Such a point can also contribute to the reduction in the production cost for the coupled case.

Next, in the present invention, when the bonded magnet is press-fitted into such a coupled case, the softened bonded magnet is fed into the cylindrical portion that allows relative posture variation. This allows the bonded magnet to be stably press-fitted into the case (cylindrical portion), and the inner surface of the bonded magnet can have a desired accuracy depending on the inner surface of the case. Thus, the field magnet can be obtained at a reduced production cost while satisfying the required specs.

The reason why the manufacturing method of the present invention achieves both stable press-fitting of the bonded magnet and ensuring accuracy of its inner surface is considered as follows.

The bonded magnet is composed of a molded body obtained by solidifying a mixture of magnet particles and a heated and softened or melted resin in a mold cavity. The molded body is usually taken out of the cavity before being completely cooled and solidified. Such a molded body does not necessarily have sufficient strength and rigidity, and slight deformation (distortion) may therefore occur due to handling during removal from the cavity, subsequent transportation, or the like. This distortion cannot be repaired even by the subsequent thermal curing treatment (cure treatment) and may come into and remain in the bonded magnet. The bonded magnet after the thermal curing treatment can be forcibly press-fitted into the case without any additional treatment because the strength and rigidity are sufficient. If the bonded magnet with residual distortion is press-fitted into the case without any additional treatment, however, the accuracy of the inner surface of the bonded magnet may not be ensured.

On the other hand, a bonded magnet softened by reheating after the thermal curing treatment is restored with its plasticity, and therefore the inner surface of the bonded magnet press-fitted into the cylindrical portion of the case can have a shape that follows the inner surface of the cylindrical portion. As a result, the inner surface of the bonded magnet can be ensured with accuracy corresponding to the accuracy of the inner surface of the cylindrical portion.

Unfortunately, the softened bonded magnet has lower strength (such as deflective strength) and rigidity than those of a hardened bonded magnet. Accordingly, if such a bonded magnet is forcibly press-fitted into the case, the bonded magnet may be deformed due to excessive bending stress or the like. In the present invention, therefore, the bonded magnet is press-fitted in a state in which the relative posture variation with respect to the case is allowed. The relative posture variation between the case and the bonded magnet allows them to be automatically aligned, and bending stress or the like is suppressed from acting excessively on the bonded magnet during the press fitting. In this manner, even the softened bonded magnet can be stably press-fitted into the cylindrical portion without receiving excessive stress concentration.

It is thus considered that according to the manufacturing method of the present invention, the bonded magnet can be stably press-fitted into the case, and the accuracy of the inner surface of the bonded magnet after press-fitting can be ensured, so that the production cost for the field magnet can be reduced.

### «Others»

(1) In the present specification, for descriptive purposes, the side on which a body to press-fit (i.e., the bonded magnet) is located is referred to as one side while the side on which a body to be press-fitted with (i.e., the case) is referred to as the other side. When the case is viewed, the side of an opening from which the bonded magnet is introduced is the one side while the opposite side is the other side. When the bonded magnet is viewed, the tip side (far side) to fit (feed) into the case is the other side while the rear side (near side) is the one side. For example, when the case is press-fitted to the bonded magnet from above, the lower side is the one side while the upper side is the other side.
(2) The "posture variation" as referred to in the present specification means that at least one of the case and the bonded magnet moves (rotates, slides, etc.) as a whole while substantially maintaining its own form (shape). In this regard, the posture variation is different from deformation (plastic deformation, elastic deformation) that accompanies shape change or partial displacement of itself.
(3) Unless otherwise stated, a numerical range "x to y" as referred to in the present specification includes the lower limit x and the upper limit y. Any numerical value included in various numerical values or numerical ranges described in the present specification may be selected or extracted as a new lower or upper limit, and any numerical range such as "a to b" can thereby be newly provided using such a new lower or upper limit.

### [Brief Description of Drawings]

FIG. 1A is a perspective view illustrating a field magnet (one example).
FIG. 1B is a longitudinal cross-sectional view (A-A cross-sectional view) of the field magnet.
FIG. 2A is a cross-sectional view schematically illustrating the initial stage (one example) of press-fitting a ring magnet into a case.
FIG. 2B is a cross-sectional view schematically illustrating the final stage (one example) of press-fitting the ring magnet into the case.
FIG. 3A is a cross-sectional view schematically illustrating one state example in which a ring magnet is press-fitted into a case in which the central axes of a cylindrical portion and a lid portion are not aligned.
FIG. 3B is a cross-sectional view schematically illustrating another example of the state.
FIG. 4 is a transverse cross-sectional view (B-B cross-sectional view) illustrating the inner surface side of a receiving jig used for press-fitting.

### [Embodiments for Carrying out the Invention]

One or more features freely selected from the matters described in the present specification can be added to the above-described features of the present invention. Which embodiment is the best or not is different in accordance with objectives, required performance, and other factors. Methodological features regarding a manufacturing method can also be features regarding a product.

### «Case»

The case has at least a cylindrical portion and a lid portion on the other side (in particular, the other end side) of the cylindrical portion. The cylindrical portion and the lid portion are formed by coupling separate members rather than integrally molding them. The coupling between the cylindrical portion and the lid portion is performed, for example, by swage, welding (including spot welding), or the like. The lid portion may be coupled to a portion other than the other end side of the cylindrical portion. The case may have another portion or member in addition to the cylindrical portion and the lid portion.

The cylindrical portion may be composed, for example, of a tubular material having a predetermined length or may also be configured by rolling a plate piece of a predetermined shape into a cylindrical shape. The rolled plate piece may be formed into a cylindrical shape by joining both end portions by swage, welding, or the like or may also be held in a cylindrical shape by inserting the rolled plate piece into a ring. The inner surface of the cylindrical portion may be formed in close contact, for example, with the outer circumferential surface of a cylindrical core metal whose accuracy (such as cylindricity) is ensured. This can impart a desired accuracy to the inner surface of the cylindrical portion. The outer circumferential surface of the cylindrical portion may be cylindrical or may also be non-cylindrical. A portion (fixing portion) of the cylindrical portion into which the bonded magnet is press-fitted and fixed also serves as a yoke. At least the fixing portion may therefore be composed of a magnetic material.

The cylindrical portion may have, on its opening side, a tapered introduction portion (also referred to as a "tapered portion") having an inner surface whose diameter increases toward the one side. This enables smooth feeding of the bonded magnet into the case. The inclination angle of the tapered portion may be, for example, 5° to 12° in an embodiment or 6° to 10° in another embodiment with respect to the central axis.

The lid portion may be, for example, in any of an approximately circular shape, a curved shape, a cylindrical shape with a flange, and other similar shapes. The lid portion may only close the other end side of the cylindrical portion or may also constitute a bearing for an armature disposed in the field magnet, a holding portion for the bearing, or the like. The material and thickness of the lid portion and the cylindrical portion may be the same or different.

### «Bonded Magnet»

The bonded magnet is obtained by subjecting a cylindrical molded body comprising magnet particles and a thermosetting resin to thermal curing treatment.
(1) At least part of the magnet particles may be preferably rare earth magnet particles. This allows the bonded magnet and accordingly a motor to have improved performance, reduced size, etc. The magnet particles may be isotropic or anisotropic. The bonded magnet composed of at least isotropic magnet particles may be preferably magnetized after being press-fitted into the case. The bonded magnet composed of anisotropic magnet particles may be preferably formed of a molded body molded in magnetic field orientation. In this case, magnetization may be further performed.

The rare earth magnet particles are, for example, Nd-Fe-B-based magnet particles, Sm-Fe-N-based magnet particles, Sm-Co-based magnet particles, or the like. The magnet particles are not limited to one type and may be a mixture of a plurality of types. For example, the plurality of types of magnet particles may have different component compositions, different particle size distributions, or both.

(2) The thermosetting resin which is a binder resin is, for example, an epoxy resin, a phenol resin, an unsaturated polyester resin, an amino resin, a polyamide resin, a polyimide resin, a polyamideimide resin, a ureaformaldehyde resin, a melamine resin, a urea resin, a diallyl phthalate resin, polyurethane, or the like. In the present specification, when a curing agent, a curing aid, etc. are required for the thermal curing, inclusion of them is referred to as a thermosetting resin.

The bonded magnet may appropriately contain various additives that improve the wettability, adhesion, and the like between the softened or melted thermosetting resin and the magnet powder. Examples of such additives include, for example, alcohol-based lubricants and titanate-based or silane-based coupling agents.

(3) The conditions of the thermal curing treatment are appropriately adjusted in accordance with the type of the thermosetting resin, the size of the bonded magnet, etc. When the thermosetting resin is an epoxy resin, the conditions may be adjusted within the ranges of heating temperature: 80°C to 200°C and heating time: 10 to 60 minutes, depending on the type of resin. The heating atmosphere may be an air atmosphere, but a non-oxidizing atmosphere (such as Ar, N₂, or vacuum) can suppress the deterioration of the bonded magnet (magnet particles) due to oxidation.

### «Softening Step»

The softening step includes reheating and softening the bonded magnet subjected to the thermal curing treatment. The softening may be performed to such an extent that the bonded magnet has both the plasticity that allows the bonded magnet to be in a cylindrical shape along the inner surface of the case and the mechanical properties (such as strength and rigidity) that allow the bonded magnet to be press-fitted into the case.

The reheating temperature for the bonded magnet is appropriately adjusted in accordance with the type of thermosetting resin, its mass ratio, thermal history, and the like. In general, the bonded magnet may be heated at a temperature lower than a thermal curing treatment temperature (T₀)+100 degrees. For example, that temperature may be T₀+70°C or lower in an embodiment, T₀+40°C or lower in another embodiment, T₀+10°C or lower in still another embodiment, T₀ or lower in yet another embodiment, or T₀-20°C or lower in still yet another embodiment. From another aspect, that temperature may be 40°C or higher in an embodiment or 50°C or higher in another embodiment. As an example, when the thermosetting resin is a phenol novolac type epoxy resin, that temperature may be, for example, 270°C to 40°C in an embodiment, 240°C to 40°C in another embodiment, 210°C to 50°C in still another embodiment, 180°C to 60°C in yet another embodiment, 150°C to 90°C in still yet another embodiment, 140°C to 100°C in a further embodiment, or 130°C to 110°C in a still further embodiment. As another example, when the thermosetting resin is a bisphenol A type epoxy resin, that temperature may be, for example, 150°C to 40°C in an embodiment, 120°C to 40°C in another embodiment, 90°C to 40°C in still another embodiment, 80°C to 50°C in yet another embodiment, or 70°C to 55°C in still yet another embodiment.

If the reheating temperature is unduly high, the mechanical properties of the bonded magnet may deteriorate, making the press fitting difficult. If the reheating temperature is unduly low, the plasticity of the bonded magnet may be insufficient, making it difficult for the bonded magnet to deform along the inner surface of the case. The heating temperature of the bonded magnet as referred to in the present specification is the atmospheric temperature of a heating furnace or the like. When the thermal curing treatment temperature varies, or when the thermal curing treatment is performed in multiple stages, the maximum temperature during the thermal curing treatment may be adopted as a reference (T₀) for the reheating temperature.

The heating time of the bonded magnet can be appropriately adjusted in accordance with its size (thickness), the type and mass ratio of the thermosetting resin, etc. For example, the reheating may be performed for 10 seconds to 1 hour in an embodiment or 20 seconds to 30 minutes in another embodiment.

### «Press-fitting Step»

The press-fitting step includes feeding the bonded magnet relatively into the case while allowing the relative posture variation between the bonded magnet and the case.
(1) On the assumption that the bonded magnet is being fed into the case, the posture variation may be enough if at least one of the bonded magnet and the case is movable in a direction other than the feeding direction. Provided that such a posture variation is possible, the bonded magnet or the case may be in a completely unrestrained state (free state) or may also be in a state of being partially supported by a guide or the like.

The posture variation may be, for example, tilting movement (rotational movement) or lateral movement (translational movement) alone or a combination of the two. The lateral movement (slide) is movement in a direction that intersects the feeding direction (e.g., an approximately orthogonal direction). For descriptive purposes, the movement approximately in the feeding direction is also referred to as vertical movement.

The tilting movement may be rotation around a specific point (e.g., a contact point between the case and a jig) or may also be rotation around an instantaneous center that changes. The tilting movement may be deflection (swing) with respect to the feeding direction (axial direction with respect to the inner surface of the cylindrical portion or the inner surface of the bonded magnet) or may also be rotation (rotational movement/swinging) around the feeding direction. The posture variation may be achieved by the movement of one of the case and the bonded magnet or may also be achieved by the movement of the two (cooperation).

(2) The feeding may be performed by moving one of the case and the bonded magnet or may also be performed by moving the two. Ordinarily, the feeding is performed such that while the movement of one of the case and the bonded magnet is restricted, the other is moved. For example, the bonded magnet is fed into the case while supporting the case to restrict the movement of the case to the other side. In this operation, the supporting state of the case may be point-like, line-like, surface-like, or a combination of two or more thereof. Provided that the relative posture variation is possible, the supporting of the case (restriction of movement) may be performed at the other end portion or at another portion (e.g., at an intermediate portion). The other end portion of the case to be supported may be the other end portion of the cylindrical portion or the other end portion of the lid portion. The other end portion of the lid portion to be supported may be the outer edge portion or the central portion.

The tightening margin (fitting margin) is appropriately adjusted in accordance with the thickness of the bonded magnet and case, the rigidity of the bonded magnet, the application of the motor, etc. The tightening margin may be such that the bonded magnet does not fall off from the case at least after the press-fitting step.

### «Field Magnet»

The field magnet obtained by the manufacturing method of the present invention may be used, for example, for electric motors (including generators) such as a direct current (DC) motor and an alternating current (AC) motor. Such a field magnet ordinarily constitutes a stator.

### [Examples]

The present invention will be described in more detail by exemplifying an instance in which the ring magnet (bonded magnet) is fitted into the case to manufacture a field magnet for motor.

### «Field Magnet»

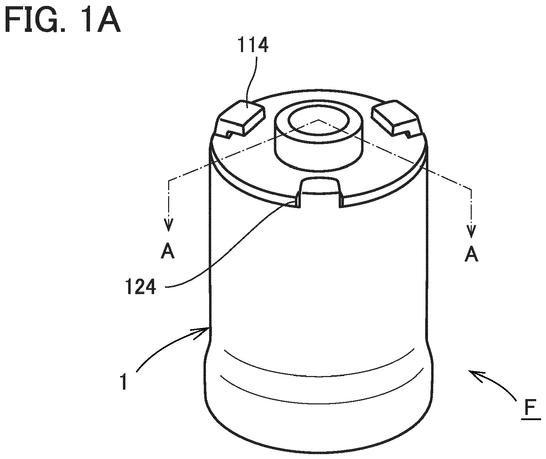

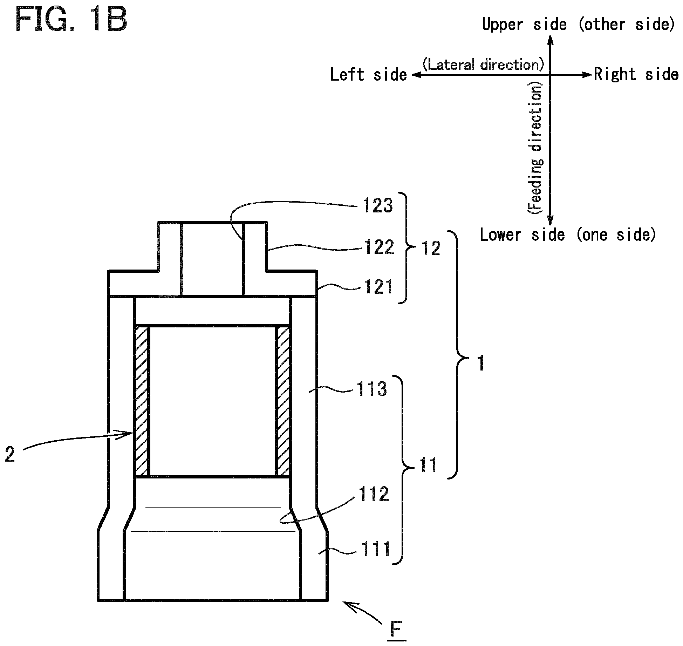

FIG. 1A illustrates a field magnet F for motor (simply referred to as a "field magnet F"), which is an example. FIG. 1B illustrates an A-A cross section illustrated in FIG. 1A. The field magnet F is composed of a case 1 and a ring magnet 2 fixed in the case 1 without using an adhesive. These details are as follows. In this example, for descriptive purposes, the up-down direction, the right-left direction, the feeding direction, and the lateral direction are respective directions illustrated in each figure. The lower side and the upper side illustrated in each figure correspond respectively to the one side and the other side as referred to in the present specification, and the vertical direction from the lower side to the upper side is the feeding direction. The members already described are denoted with the same reference numerals, and the description thereof is omitted as appropriate.
(1) The case 1 is composed of a cylindrical portion 11 and a lid portion 12 fixed on the other side of the cylindrical portion 11. The cylindrical portion 11 has an opening portion 111, a tapered portion 112 (introduction portion), a fixing portion 113, and hook portions 114 in order from the one side. The opening portion 111 has a larger diameter than that of the fixing portion 113. The tapered portion 112 (introduction portion) between the opening portion 111 and the fixing portion 113 smoothly connects their inner surfaces and outer circumferential surfaces. The degree of diameter increase (diameter difference) of the opening portion 111 with respect to the fixing portion 113 is exaggerated for descriptive purposes, but it is actually small (e.g., the diameter difference is 1 mm or less).

The hook portions 114 are three projections extending from the other end side of the fixing portion 113. The hook portions 114 are formed corresponding to cutout portions 124 of the lid portion 12, which will be described later.

The lid portion 12 has a flange portion 121 and a cylindrical holding portion 122 protruding from the vicinity of the center of the flange portion 121 to the other side. Three cutout portions 124 are evenly formed at approximately 120° intervals on the outer circumferential edge side of the flange portion 121. A bearing that supports the rotating shaft of a motor is inserted in an inner cylindrical portion 123 of the holding portion 122. The lid portion 12 closes the other side of the cylindrical portion 11. That is, the case 1 forms an approximately bottomed cylindrical shape from the cylindrical portion 11 and the lid portion 12.

Both the cylindrical portion 11 and the lid portion 12 are composed of plate pieces obtained by cutting or punching a soft iron steel plate (magnetic material) into desired shapes. The cylindrical portion 11 is composed of a joined cylindrical body obtained through winding a plate piece into a cylindrical shape and joining the end portions by welding or swage. When the cutout portions 124 of the lid portion 12 are fitted to the projections (front portions of the hook portions 114) formed on the upper end side of the joined cylindrical body and the projections are bent inward, the lid portion 12 comes to a state of being swaged and fixed by the hook portions 114 on the other side of the cylindrical portion 11. After the lid portion 12 is fixed or at the same time as when the lid portion 12 is fixed, the opening portion 111, tapered portion 112, and fixing portion 113 of the cylindrical portion 11 and the holding portion 122 of the lid portion 12 are formed by a cored bar (punch). This allows the inner surface of each portion to have a desired accuracy. The accuracy of the outer circumferential surface of the cylindrical portion 11 and the upper surface (the other end portion) of the lid portion 12 has a sufficiently small effect on the performance of the field magnet F as compared with the accuracy of the inner surfaces, and therefore the former accuracy is not set with strict dimensional or geometrical tolerance unlike each inner surface.

(2) The ring magnet 2 is composed of a bonded magnet obtained by subjecting a molded body to thermal curing treatment. The bonded magnet is formed by compression-molding a compound comprising rare earth magnet particles and a thermosetting resin into a cylindrical shape. The ring magnet 2 has a cylindrical portion 22, an annular end surface 21 on the one side of the cylindrical portion 22, and another annular end surface 23 on the other side of the cylindrical portion 22.

In the stage after the thermal curing treatment, strict dimensional or geometrical tolerance is not set for an inner surface 22a and an outer circumferential surface 22b of the cylindrical portion 22. However, the inner perimeter or thickness (lateral direction/radial direction) of the cylindrical portion 22 is set within a predetermined range.

### «Jig»

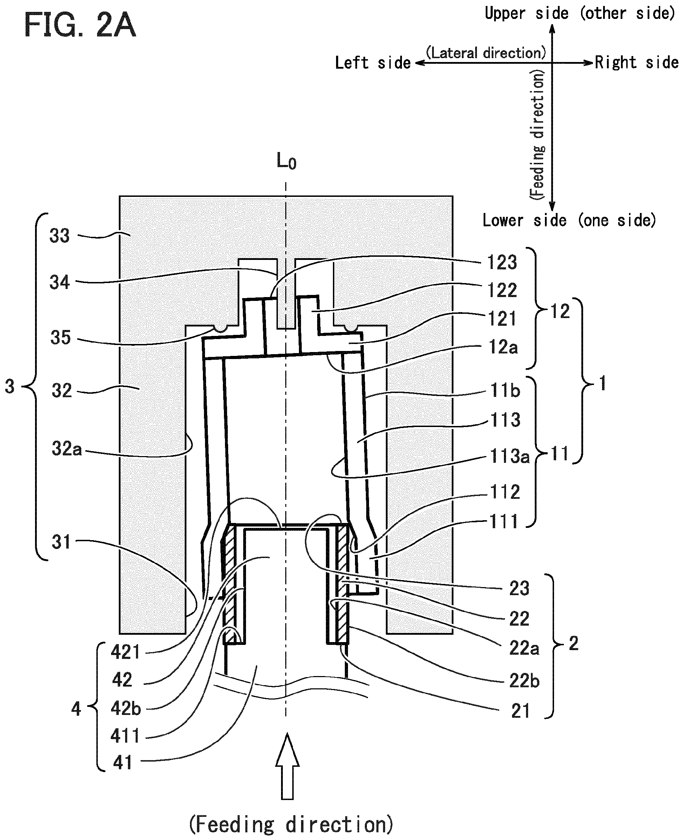

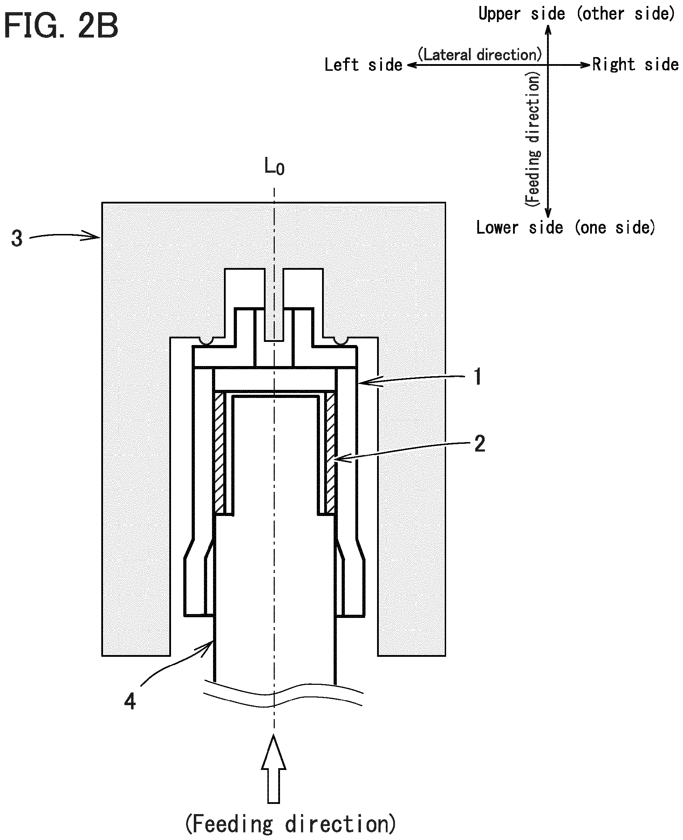

FIGS. 2A and 2B (both figures will be collectively referred to as "FIG. 2" in a simple term) illustrate a receiving jig 3 and a feeding jig 4 that are used when press-fitting the ring magnet 2 into the case 1. These details are as follows.
(1) The receiving jig 3 is an approximately bottomed cylindrical body composed of tool steel. The receiving jig 3 includes an opening portion 31 on the one side, a cylindrical portion 32, and a bottom portion 33. The inner diameter of the cylindrical portion 32 is larger than the outer diameter of the cylindrical portion 11 (opening portion 111) of the case 1. Therefore, there is a gap between an inner surface 32a of the receiving jig 3 and an outer circumferential surface 11b of the case 1, and the case 1 is capable of posture variation such as tilting movement or lateral movement within the range of the gap.

On the inner surface side of the bottom portion 33, a cylindrical guide pin 34 projecting to the lower side (one side) from the center and three protrusions 35 (protruding portions) each formed with a curved surface are formed. The protrusions 35 are evenly arranged on the outer circumferential lower side of the guide pin 34. The receiving jig 3 is arranged (fixed) so that the guide pin 34 is in the vertical direction (feeding direction).

(2) The feeding jig 4 is a stepped cylindrical body composed of tool steel. The feeding jig 4 includes a cylindrical base portion 41 and a cylindrical interpolation portion 42 that extends upward (on the other side) from the base portion 41. The outer diameter of the base portion 41 is slightly smaller than the outer diameter of the ring magnet 2 (outer circumferential surface 22b). The outer diameter of the interpolation portion 42 is smaller than the outer diameter of the base portion 41 and further smaller than the inner diameter of the ring magnet 2 (inner surface 22a). The ring magnet 2 is placed on an annular lower surface 411 formed between the base portion 41 and the interpolation portion 42 so that the end surface 21 is in contact with the lower surface 411. There is also a gap between an outer circumferential surface 42b of the interpolation portion 42 and an inner surface 22a of the ring magnet 2, and the ring magnet 2 is capable of slight posture variation (such as tilting movement or lateral movement) within the range of the gap.

The length of the interpolation portion 42 in the up-down direction is shorter than that of the ring magnet 2, and an upper surface 421 of the interpolation portion 42 does not protrude from the end surface 23 of the ring magnet 2 placed on the feeding jig 4. The feeding jig 4 can therefore feed the ring magnet 2 to a position, or its vicinity, at which the end surface 23 of the ring magnet 2 comes into contact with a lower surface 12a of the lid portion 12 (inner bottom surface of the case 1).

A hydraulic cylinder (not illustrated) is disposed on the one side of the feeding jig 4, and the feeding jig 4 can move to a predetermined position at a desired speed by controlling the pressure of oil supplied to the hydraulic cylinder.

In this example, as illustrated in FIG. 2, the receiving jig 3 and the feeding jig 4 were linearly moved relative to each other with their central axes being approximately aligned. The receiving jig 3 and the feeding jig 4 may be moved relative to each other while subjecting at least one central axis thereof to tilting movement, swing, or the like. That is, at least one of the receiving jig 3 and the feeding jig 4 may undergo its posture variation in the press-fitting direction. For example, at least one of the jigs may be subjected to swing or the like via a universal joint or other similar tool extending in the press-fitting direction. Thus, the posture variation of at least one of the receiving jig 3 and the feeding jig 4 may be performed together with or as substitute for the posture variation between the case 1 and the ring magnet 2.

### «Assembly»

### (1) Softening step

The ring magnet 2 is preliminarily heated in a heating furnace (air atmosphere) at a temperature lower than the thermal curing treatment temperature. This allows the ring magnet 2 to be softened to exhibit plasticity while maintaining the strength and rigidity required for the press fitting.

### (2) Setting step

The softened ring magnet 2 is engaged with the interpolation portion 42 from above and set on the feeding jig 4 (see FIG. 2A). As described previously, there is a gap between the inner surface 22a of the ring magnet 2 and the interpolation portion 42 of the feeding jig 4, and the ring magnet 2 can therefore undergo lateral movement or the like within the range of the gap.

The opening portion 111 of the case 1 is engaged with the ring magnet 2 from above. At this time, the case 1 is held in a state in which, for example, the inner surface of the tapered portion 112 is in contact with the outer circumferential edge of the end surface 23 of the ring magnet 2 and the ring magnet 2 is slightly tilted from the vertical direction (see FIG. 2A).

### (3) Press-fitting step

In a state in which the ring magnet 2 is covered with the case 1, the hydraulic cylinder is operated to move the feeding jig 4 upward. This allows the case 1 to enter the receiving jig 3 first. There is a gap between the outer circumferential surface 11b of the case 1 and the inner surface 32a of the receiving jig 3, and therefore the case 1 can undergo the posture variation (such as lateral movement or tilting movement) within the range of the gap.

As the feeding jig 4 is raised, as illustrated in FIG. 2A, the guide pin 34 of the receiving jig 3 is inserted into the holding portion 122 of the case 1, and one of the protrusions 35 of the receiving jig 3 starts contacting the upper surface of the flange portion 121 of the case 1 (the other end portion of the lid portion) in a point-like manner.

The case 1 undergoes tilting movement in the vertical direction (feeding direction) and/or lateral movement (gliding/sliding) centered on the contact point between the upper surface of the flange portion 121 and the protrusion 35 within the range of the gap formed between the guide pin 34 and the holding portion 122. Thus, the case 1 and the ring magnet 2 come into a state in which they are automatically aligned (state in which the central axes of the fixing portion 113 and ring magnet 2 are approximately aligned with each other). Then, the upper surface of the lid portion 12 also come into contact with the other protrusions 35, and the movement to the upper side (the other side) of the case 1 is restricted.

When the feeding jig 4 is further raised, as illustrated in FIG. 2B, the ring magnet 2 is fed into the fixing portion 113 while in a state of being aligned with the case 1. During this operation, the ring magnet 2 is in a softened state, so its inner surface 22a is remolded along an inner surface 113a of the fixing portion 113. Thus, the inner surface 22a of the ring magnet 2 has approximately the same accuracy (such as circularity) as the inner surface 113a of the fixing portion 113. The ring magnet 2 may be fed until its end surface 23 comes into contact with the lower surface 12a of the lid portion 12 or may also be held at an intermediate position before that contact.

In this way, the field magnet F is obtained in which the inner surface 22a of the ring magnet 2 press-fitted in the case 1 satisfies the desired accuracy (such as circularity). As apparent from the above-described steps, the accuracy of the inner surface 22a does not depend on the accuracy of the outer circumferential surface 11b or lid portion 12 of the case 1.

### «Modified Example»

(1) The protrusions 35 of the receiving jig 3 may come into contact with the hook portions 114. The inner bottom surface side of the receiving jig 3 and the upper end surface side of the case 1 may be in point-like contact, line-like contact, or surface-like contact. The press-fitting as described above is possible even without the guide pin 34 or protrusions 35 of the receiving jig 3.

Alternatively, the protrusions 35 of the receiving jig 3 may come into contact with the holding portion 122 of the lid portion 12. That is, even the holding portion 122 or the like can be the other end portion of the lid portion 12 if it is located on the other side of the lid portion 12. The support (movement restriction) of the case 1 may be performed, for example, by an intermediate portion of the cylindrical portion 11 (such as the outer circumferential surface side of the tapered portion 112). When the case 1 is supported at the outer circumferential surface of the tapered portion 112, the diameter difference between the opening portion 111 and the fixing portion 113 may be set larger than the dimension example described in the embodiment.

One end portion of the ring magnet 2 in the axial direction may reach the tapered portion 112 or may be exposed (protruded) from the fixing portion 113. Even in this case, the accuracy (such as circularity) of the inner surface of the ring magnet 2 press-fitted in the fixing portion 113 can be ensured.

In addition to the receiving jig 3 and the feeding jig 4, a third jig having a substitute function for the tapered portion 112 may be provided. The third jig is provided on the opening side of the case 1, and it is sufficient if the posture variation of the third jig with respect to the receiving jig 3 is possible integrally with the case 1.

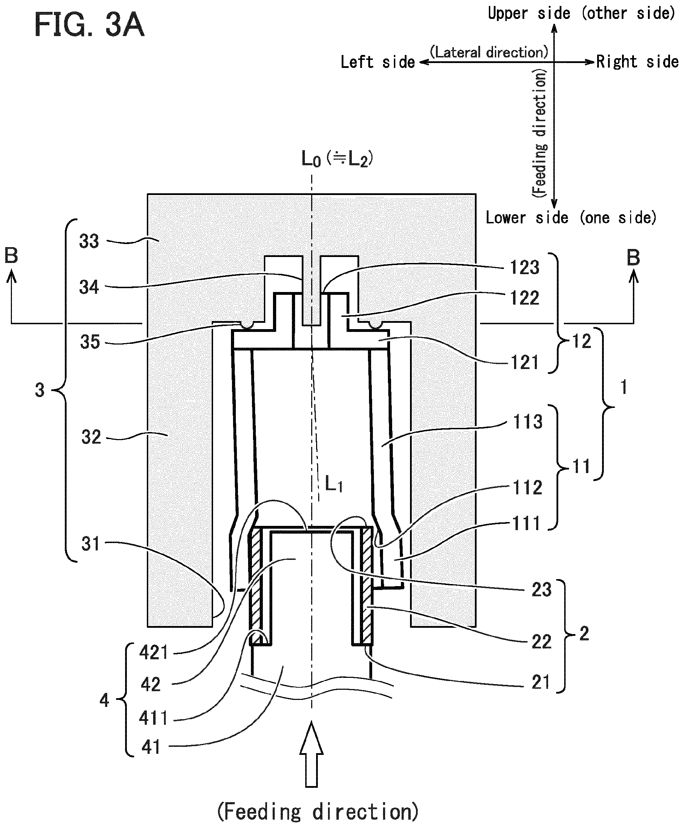

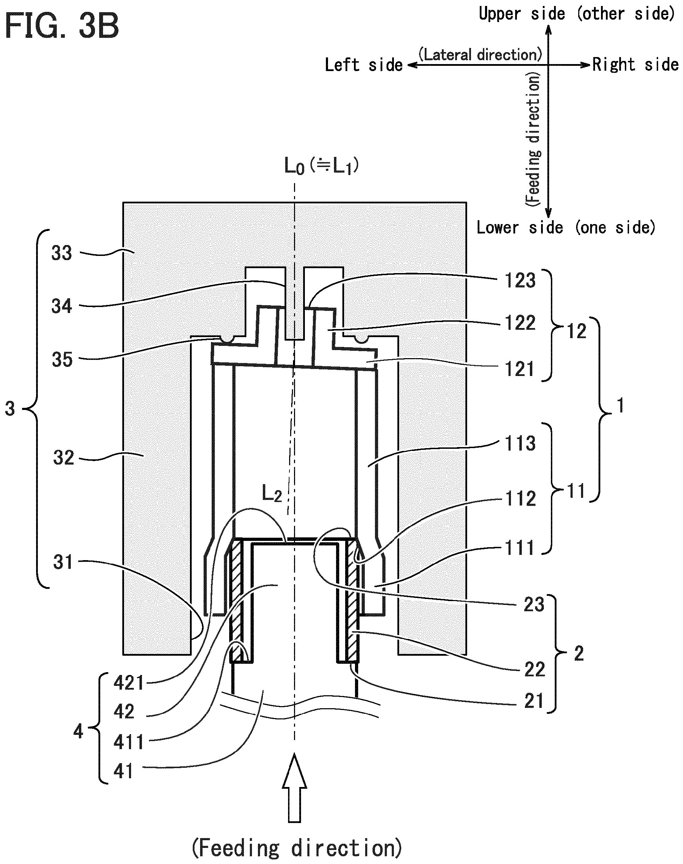

(2) As illustrated in FIGS. 3A and 3B (both figures will be collectively referred to as "FIG. 3" in a simple term), central axes L1 and L2 of the cylindrical portion 11 and the lid portion 12 (inner cylindrical portion 123) constituting the case 1 may intersect. Even in such a case, according to the manufacturing method of the present invention, the ring magnet 2 can be properly press-fitted into the cylindrical portion 11 of the case 1. These will be described below. Note that the intersection of the central axis L1 of the cylindrical portion 11 and the central axis L2 of the lid portion 12 (inner cylindrical portion 123) may occur, for example, when both are swaged to be assembled.

For descriptive purposes, the fixed state of the cylindrical portion 11 and the lid portion 12 (intersection of the central axes L1 and L2) is exaggerated and illustrated in FIG. 3. A central axis L0 illustrated in FIG. 3 represents the central axis of the receiving jig 3 (guide pin 34), the feeding jig 4 (interpolation portion 42), or the ring magnet 2. For descriptive purposes, FIG. 3 illustrates a state in which the central axes are aligned, but the central axes may be shifted in the right-left direction. The central axis L2 of the lid portion 12 is ordinarily approximately orthogonal to the end surface of the flange portion 121.

When the feeding jig 4 is moved toward the receiving jig 3 in order to press-fit the ring magnet 2 into the case 1, the other end surface of the lid portion 12 can come into contact with the protrusions 35 of the receiving jig 3. At this time, the ring magnet 2 comes into contact with the cylindrical portion 11 at one side, and the case 1 may therefore receive force in the rotational direction and/or the lateral direction.

This allows the state to transition from a state in which the central axis L1 of the cylindrical portion 11 is not approximately aligned with the central axis L0 of the feeding jig 4 (or the ring magnet 2) (FIG. 3A) to a state in which the central axis L1 is approximately aligned with the central axis L0 (FIG. 3B). At this time, the other side surface of the flange portion 121 of the lid portion 12 is in a state of being in contact with only one or two protrusions 35 of the receiving jig 3. In other words, even when there are three or more protrusions 35, the other side surface of the flange portion 121 does not come into contact with the three or more protrusions 35. At this time, the case 1 is in a state in which its upward movement is restricted by one or two protrusions 35 that are in contact with the flange portion 121. In addition, the central axis L1 of the cylindrical portion 11 is in a state of being approximately constant or approximately parallel to the central axis L0 of the feed jig 4 or the ring magnet 2. When the feeding jig 4 is further moved upward from this state (FIG. 3B), the ring magnet 2 is properly press-fitted into the cylindrical portion 11.

Comparing a case in which the receiving jig 3 has the protrusions 35 with a case in which the receiving jig 3 has no protrusions, the posture variation of the case 1 can occur with a smaller load when the protrusions 35 are present. This can be considered as follows. First, considering the rotation, when the receiving jig 3 does not have the protrusions 35, the center of rotation of the case 1 is the outer edge portion of the flange portion 121 in the lid portion 12. On the other hand, when the protrusions 35 are present, the center of rotation of the case 1 is the contact portion between the protrusion 35 and the lid portion 12. Therefore, when the protrusions 35 are present, the center of rotation of the case 1 is radially inward, that is, closer to the central axis L0.

Comparing the above two cases, the angle of a straight line connecting between the position (the outer edge portion or the protrusion 35) to be the center of rotation and the load receiving position (the contact portion between the tapered portion 112 of the case 1 and the ring magnet 2) is different. That is, when the protrusions 35 are present, a larger rotational moment can be obtained with a smaller load. Therefore, the ring magnet 2 can be press-fitted into the case 1 while reducing the load acting on the ring magnet 2, and the deformation of the ring magnet 2 during press-fitting is suppressed.

Considering the lateral movement, when the protrusions 35 are present, the protrusions 35 and the lid portion 12 are in a state close to point contact. On the other hand, when the protrusions 35 are not present, the receiving jig 3 and the lid portion 12 are in a state close to surface contact. Therefore, comparing these cases, the frictional resistance applied to the lid portion 12 can be sufficiently reduced when the protrusions 35 are present. In other words, the load applied to the ring magnet 2 as the reaction force of the load applied to the case 1 is further reduced, and deformation of the ring magnet 2 is suppressed in this regard as well.

Thus, according to the examples (including the modified example), it is possible to avoid deformation of the ring magnet 2 due to the feeding. In other words, the ring magnet 2 is properly press-fitted into the cylindrical portion 11, and the field magnet F that satisfies the desired required specs can be obtained. There are various forms of axial misalignment between the lid portion 12 and the cylindrical portion 11, and it is therefore preferred to provide the protrusions 35 at least at two locations across the central axis L2 of the lid portion 12. As will be understood, it is more preferred to provide three or more protrusions 35, and it is even more preferred to arrange them at equal angular intervals. In this example, the protrusions 35 and the lid portion 12 are in a state close to point contact, but the tip shape of each protrusion 35 may be point-like, line-like, or surface-like.

According to the manufacturing method of the present invention, the desired field magnet F can be obtained even if there is a manufacturing error (such as an assembly error) between the cylindrical portion 11 and the lid portion 12 which constitute the case 1. Note that the error which occurs during the manufacture of the case 1 is, needless to say, within an allowable range that satisfies the required specs of the field magnet F. To this extent, the case 1 is not limited to being composed of a plurality of members and may of course be integrally formed by deep drawing or the like. Even in an integrally formed product, manufacturing errors (e.g., misalignment between the cylindrical portion 11 and the lid portion 12, etc.) may occur.

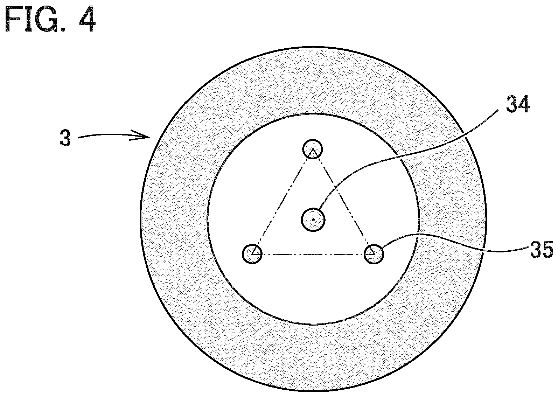

(3) As illustrated in FIG. 4 (B-B cross-sectional view in FIG. 3A), three protrusions 35 are arranged approximately evenly (at equal angular intervals) on the inner surface side of the receiving jig 3. The central axis L0 of the feeding jig 4 or the ring magnet 2 may be preferably located within a region formed by connecting between the adjacent protrusions 35 with straight lines. This prevents the case 1 from significantly tilting with respect to the central axis L0 within the receiving jig 3 regardless of the assembled state of the cylindrical portion 11 and the lid portion 12. Accordingly, when the feeding jig 4 is fed into the receiving jig 3, the ring magnet 2 is properly press-fitted into the case 1 regardless of the assembled state of the cylindrical portion 11 and the lid portion 12.

The number and size of the protrusions 35 can be adjusted as appropriate. For example, when three or more protrusions 35 having approximately the same size are provided, the lid portion 12 can stably contact any one of the protrusions 35. As the number of protrusions 35 increases, however, the posture variation range of the case 1 may become smaller.

### «Evaluation Examples»

### (1) Case and ring magnet

Using the actually manufactured case 1 and ring magnet 2, the effects of the above-described softening step and press-fitting step were confirmed.

The case 1 was made of cold-rolled steel plate, and its fixing portion 113 was designed to have an outer diameter: ϕ34.0 mm, an inner diameter: ϕ30.0 mm, and a length: 70.0 mm. The inner surface of the tapered portion 112 was set to have an inclination angle of 8° with respect to the central axis. The circularity of the inner surface 113a of the fixing portion 113 was set to 0.10 mm. The circularity was measured in accordance with JIS B0021 (here and hereinafter).

The ring magnet 2 was manufactured as follows. A compound comprising NdFeB-based rare earth anisotropic magnet particles (available from AICHI STEEL CORPORATION, MAGFINE magnet powder MF15P) and an epoxy resin was used as the raw material. The amount of epoxy resin with respect to the entire compound was 3 mass%. The epoxy resin was a phenol novolac type, and its thermosetting temperature was 150°C.

The compound was compressed while being heated in the cavity of a mold (150°C×130 MPa×6 seconds) to obtain a cylindrical molded body (outer diameter: ϕ30.2 mm×inner diameter: ϕ28.1 mm×length: 30 mm). This molded body was heated in a heating furnace of an air atmosphere and subjected to thermal curing treatment (150°C×40 minutes). The ring magnet 2 composed of the bonded magnet was thus prepared.

### (2) Assembly

First, the ring magnet 2 after the softening step was incorporated into the case 1 using the receiving jig 3 and feeding jig 4 illustrated in FIG. 2A (press-fitting step). In the softening step, the ring magnet 2 was heated in a heating furnace of an air atmosphere (150°C×30 seconds). The press-fitting step was performed with a load of 985 N and a moving speed of 30 mm/sec.

The inner surface 22a of the ring magnet 2 thus incorporated in the case 1 had a circularity of 0.12 mm.

### (3) Comparative example

When the above-described press-fitting step was performed on the ring magnet 2 which was not subjected to the softening step, cracks sometimes occurred on the inner surface 22a of the ring magnet 2. When the ring magnet 2 after the above-described softening step was fed into the case 1 without allowing the posture variation between the case 1 and the ring magnet 2, the load was abnormal and the press fitting was not able to be performed.

### (4) Evaluation

From each measurement result (circularity), it has been confirmed that the inner surface 22a of the ring magnet 2 can have a desired accuracy by press-fitting the softened ring magnet 2 into the case 1 in a state in which the posture variation is allowed. On the contrary, it has also been found that when the softening step is omitted or the press-fitting step is performed without allowing the posture variation, it is difficult to stably press-fit the ring magnet 2 into the case 1.

Similar evaluation was also performed on the case 1 assembled in a state in which the lid portion 12 and the cylindrical portion 11 were misaligned. As a result, it has been confirmed that the inner surface 22a of the ring magnet 2 can be similarly formed with the desired accuracy by press-fitting the ring magnet 2 while allowing the posture variation as described above.

### [Description of Reference Numerals]

- 1: Case
- 11: Cylindrical portion
- 12: Lid portion
- 2: Ring magnet (bonded magnet)
- 3: Receiving jig
- 4: Feeding jig

## Claims

1. A method for manufacturing a field magnet formed such that a cylindrical bonded magnet is fixed in an approximately bottomed tubular case, the bonded magnet being formed by binding magnet particles with a thermosetting resin, the method comprising:
a softening step for reheating and softening the bonded magnet after thermal curing treatment; and
a press-fitting step for press-fitting the softened bonded magnet into the case from an opening on one side of the case,
the case having a cylindrical portion and a lid portion coupled to an other side of the cylindrical portion, the cylindrical portion having a fixing portion for the bonded magnet, at least the fixing portion being formed of a magnetic material,
the press-fitting step including feeding the bonded magnet relatively into the cylindrical portion while allowing a relative posture variation between the bonded magnet and the case.

2. The method according to claim 1, wherein the press-fitting step includes supporting an end portion of the case on the other side and restricting movement of the case to the other side.

3. The method according to claim 2, wherein the end portion of the case on the other side is an end portion of the lid portion on the other side.

4. The method according to any one of claims 1 to 3, wherein the lid portion is coupled to the other end side of the cylindrical portion by swage or welding.

5. The method according to any one of claims 1 to 4, wherein the press-fitting step includes moving the bonded magnet to the other side while allowing tilting or lateral movement of the case.

6. The method according to any one of claims 1 to 5, wherein the cylindrical portion has a tapered introduction portion on the one side of the fixing portion, the introduction portion having an inner surface whose diameter increases toward the one side.

7. The method according to any one of claims 1 to 6, wherein the softening step includes heating the bonded magnet at a temperature lower than a temperature that is higher than a thermal curing treatment temperature (T₀) by 100°C (T₀+100°C).

8. The method according to any one of claims 1 to 7, wherein the case is for an electric motor.

9. The method according to any one of claims 1 to 8, wherein
the press-fitting step is performed using a receiving jig that restricts movement of the case to the other side and a feeding jig that feeds the bonded magnet into the case, and
the receiving jig has at least one protruding portion that comes into contact with an end portion of the case on the other side.

10. The method according to claim 9, wherein the feeding jig feeds the bonded magnet into the case while the end portion of the case on the other side is kept in contact with the protruding portion.

11. The method according to claim 9 or 10, wherein the protruding portion comprises three or more protruding portions that are spaced apart from each other.

12. The method according to claim 11, wherein the feeding jig feeds the bonded magnet in a state in which a central axis of the bonded magnet intersects a region formed by connecting between adjacent protruding portions with straight lines.
